Europäisches Patentamt

European Patent Office

Office européen des brevets

(11) Veröffentlichungsnummer: **0 210 493 B1**

# EUROPÄISCHE PATENTSCHRIFT

(45) Veröffentlichungstag der Patentschrift: **02.01.92**

(51) Int. Cl.⁵: **C12N 11/00**, C02F 3/10

(21) Anmeldenummer: **86109421.7**

(22) Anmeldetag: **10.07.86**

(54) **Wässrige Suspensionen von Agglomeraten, ihre Herstellung und Verwendung.**

(30) Priorität: **23.07.85 DE 3526180**

(43) Veröffentlichungstag der Anmeldung:
**04.02.87 Patentblatt 87/06**

(45) Bekanntmachung des Hinweises auf die
Patenterteilung:
**02.01.92 Patentblatt 92/01**

(84) Benannte Vertragsstaaten:
**DE FR GB IT**

(56) Entgegenhaltungen:
EP-A- 0 150 747
EP-A- 0 151 937
DE-A- 2 435 702
DE-C- 163 505
FR-A- 2 354 966

CHEMICAL ABSTRACTS, Band 104, Nr. 2, 13.
Januar 1986, Seite 279, Zusammenfassung
Nr. 10106u, Columbus, Ohio, US; & SU-A-1
172 887 (INSTITUTE OF MICROBIOLOGY AND
VIROLOGY, ACADEMY OF SCIENCES KA-
ZAKH S.S.R.) 15-08-1985

(73) Patentinhaber: **BAYER AG**

**W-5090 Leverkusen 1 Bayerwerk(DE)**

(72) Erfinder: **Goossens, John, Dipl.-Ing.**
**Hebbelstrasse 5**
**W-5090 Leverkusen(DE)**
Erfinder: **Baumgarten, Jörg, Dr.**
**Henselweg 13**
**W-5600 Wuppertal(DE)**
Erfinder: **Rast, Hans-Georg, Dr.**
**Rommerscheider Höhe 10**
**W-5060 Bergisch Gladbach 2(DE)**
Erfinder: **Zembrod, Alfred, Dr. Woodwind**
**Condominium**
**613 Clarinet Blv. East, App. 613**
**Elkhart IN 46516(US)**
Erfinder: **Henzler, Hans-Jürgen, Dr.**
**Eggenweg 30**
**W-5650 Solingen(DE)**
Erfinder: **Pascik, Imre, Dr.**
**Wilmersdorfer Strasse 6**
**W-4019 Monheim(DE)**
Erfinder: **Rahlwes, Dieter, Dr.**
**Reifenbergstrasse 28**
**W-5300 Bonn 3(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

CHEMICAL ABSTRACTS, Band 89, Nr. 22, 27. November 1978, Seite 339, Zusammenfassung Nr. 185533e, Columbus, Ohio, US; & JP-A-78 32 891 (AGENCY OF INDUSTRIAL SCIENCES AND TECHNOLOGY) 28-03-1978

## Beschreibung

Die Erfindung betrifft Suspensionen von Agglomeraten, wobei die Agglomerate aus organischen und/oder anorganischen Teilchen einerseits und einem Polymer aufgebaut sind, der als Latex den Teilchensuspensionen zugegeben werden.

Unter Agglomeraten werden dabei Partikel verstanden, die aus mindestens zwei gleichen oder verschiedenen Primärteilchen aufgebaut sind und eine mittlere Absetzgeschwindigkeit von 10 bis 200 m/h aufweisen.

Die Erfindung betrifft ferner die Herstellung der Agglomerat-Suspensionen mit Hilfe von Polymerlatices und ihre Verwendung als Träger und/oder Katalysator in biotechnologischen Prozessen.

Ein genügend hoher Umsatz bei biotechnologischen Verfahren ist abhängig von der Biomasse. Bei kontinuierlichen Verfahren, bei denen Substrat-Zufuhr und Produkt-Abfuhr simultan stattfinden, muß der Verlust an Biomasse in Grenzen gehalten werden. Dies ist insbesondere der Fall, wenn während der Bioreaktion nur ein geringes Wachstum der Biomasse stattfindet. Ein Zurückhalten der Biomasse im System in einer genügend hohen Konzentration ist aber ohne besonders Maßnahmen im allgemeinen schwierig, insbesondere dann, wenn die Bakterien oder Zellen vereinzelt vorliegen. Auch aber bei Batchverfahren ist es vorteilhaft, wenn Biomasse und Produkt auf einfache Weise voneinander getrennt werden können. Eine Methode, um eine genügend hohe Biomassenkonzentration im Reaktor zu halten, oder die Biomasse gut abtrennen zu können, besteht darin, die Mikroorganismen oder Zellen auf schnell abtrennbaren Trägerteilchen zu adsorbieren. Besonders zu bevorzugen sind hierbei Träger, auf denen viel Biomasse pro Gewichtseinheit Trägermaterial gebunden werden kann, also Teilchen, welche eine große Oberfläche erreichbar für die Zellen oder Mikroorganismen haben.

Weiter kann bei der biotechnologischen Herstellung von Produkten oder der Degredation von Wasserinhaltsstoffen vorteilhaft von Katalysatorteilchen wie Aktivkohle oder Ionenaustauschern Gebrauch gemacht werden, welche den Produktumsatz oder Produktabbau fördern. Solche Teilchen können ohne und mit den vorgenannten Trägerteilchen verwendet werden, aber können auch selber gleichzeitig Trägerteilchen sein. Bifunktionelle Teilchen sind weiter prinzipiell durch Agglomeration von Träger- und Katalysatorteilchen herstellbar.

Agglomerate aus Trägerteilchen, Trägerteilchen plus Katalysatorteilchen oder nur Katalysatorteilchen kann man z.B. mit Hilfe von polymeren Flockungsmitteln herstellen. Solche Agglomerate sind aber besonders scherinstabil. Andererseits kann man die Teilchen in ein Gel oder Schaum einarbeiten. Hierbei bekommt man zwar stabile Teilchen aber die Trägerfläche wird größtenteils desaktiviert. Außerdem sind solche Produkte pro Gewichtseinheit Trägermaterial sehr voluminös, wodurch der Füllungsgrad des Reaktors beschränkt wird.

Aufgabe der vorliegenden Erfindung war es, Suspensionen von Agglomeraten bereitzustellen, bei denen die Agglomerate einerseits eine verbesserte Scherstabilität aufweisen, andererseits sich durch große Aktivität, bezogen auf das Volumen, auszeichnen.

Die Aufgabe wird mit Suspensionen von Agglomeraten gelöst, bei denen die Agglomerate (a) aus organischen und/oder anorganischen Teilchen und (b) einem Latex eines Polymers aufgebaut sind, wobei (c) die Menge an Latextrockensubstanz 0,5 bis 25 Gew.-%, vorzugsweise 1 bis 10 Gew.-%, bezogen auf (a) beträgt, und wobei (d) die Agglomerate eine mittlere Absetzgeschwindigkeit von 10 bis 200 m/h aufweisen.

Geeignete Latices sind z.B. soche von Styrol-Butadien-,, Butadien-, Butadien-Acrylnitril-, Chloropren-, Vinylchlorid-, Ethylen-Vinylacetat-, Acrylat- und Ethylen-Propylen-Dien-Polymeren, ferner Polyurethanlatices und Naturlatex.

Die Latices können anionisch, kationisch, amphoter oder neutral sein. Bevorzugt sind solche, deren Feststoffe eine Glastemperatur ($T_g$) haben, die kleiner oder gleich der Agglomerationstemperatur ist. Vorzugsweise ist die Glastemperatur $\leqq 20\,^\circ$C

Als organische Teilchen kommen z.B. Ionenaustauscherharze, hydrophile und hydrophobe nichtionische Adsorberharze, Kohle, z.B. Aktivkohle oder Braunkohleschwelkoks, und Zelluloseteilchen in Betracht.

Anorganische Teilchen sind z.B. Oxide, Hydroxide, Carbonate und Silikate von Metallen, insbesondere Aluminiumsilikat, Tonerden oder Calciumcarbonat, ferner $SiO_2$, $TiO_2$, $Fe_2O_3$, $Fe_3O_4$ und $Al_2O_3$.

Die Agglomerate eignen sich insbesondere als Träger für Zellen und Mikroorganismen und können, mit den Zellen oder Mikroorganismen beladen, als Katalysatoren für biotechnologische Zwecke eingesetzt werden, beispielsweise in der Abwasserklärung.

Als organische und/oder anorganische Teilchen sind Kohle, vor allem Braunkohleschwelkoks, und Kombinationen von Kohle und Metalloxiden bevorzugt.

Beispiele

Als Latices wurden die folgenden Produkte verwendet:

Latex 1 enthält ein Polymerisat aus 61 Gew.-% Butadien, 35 Gew.-% Acrylnitril und 4 Gew.-% Methacrylsäure mit einem $T_g < 0°$ C.

Latex 2 ist ein Polychloroprenlatex mit einem Tg von - 40° C.

Latex 3 enthält ein Polymerisat aus 36 Gew.-% Styrol, 60 Gew.-% Butadien und 4 Gew.-% Trimethylammoniumethylmethacrylsaures Methylsulfat mit einem Tg < -5° C.

Latex 4 enthält ein Polymerisat aus 60 Gew.-% Styrol, 36 Gew.-% Butadien, 2 Gew.-% Acrylsäure und 2 Gew.-% Acrylamid mit einem $T_g$ von 15° C.

Alle Absetzgeschwindigkeiten wurden mit der Sedimentationswaage bestimmt, angegeben ist der $\overline{V}_{50}$-Wert, d.h. der Wert, bei dem sich 50 Gew.-% der festen Teilchen abgesetzt haben.

Es wurde ein Braunkohle-Schwelkoks (gemahlen) eingesetzt mit $\overline{V}_{50}$ = 1m/h.

Es wurde ferner ein Magnetit in Form eines Rohschlamms mit einem mittleren Teilchendurchmesser von 0,4 $\mu$m eingesetzt.

Die Agglomeratsuspensionen wurden in einem 1 l-Gefäß mit einem Durchmesser von 10 cm durchgeführt. Das Gefäß war mit 4 Wellenbrechern versehen. Der Inhalt von 900 ml wurde mit einem Blattrührer von 5 cm Durchmesser bei 300 Umdrehungen pro Minute gerührt. Alle Versuche wurden bei pH 7,5 und Raumtemperatur durchgeführt; die pH-Einstellung erfolgte mit Salzsäure.

Der Braunkohlenschwelkoks wurde als 10 gew.-%ige Dispersion angerührt und auf pH 7,5 gestellt. Anschließend wurde langsam der Latex zugegeben und die Mischung 15 Minuten nachgerührt.

|  | Beispiele | | | | |
|---|---|---|---|---|---|
|  | 1 | 2 | 3 | 5 | 6 |
| Latex | 1 | 1 | 1 | 3 | 2 |
| Latex-Menge [Gew.-%] | 10 | 2,5 | 1,25 | 1 | 10 |
| $\overline{V}_{50}$ [m/h] | 68 | 36 | 27 | 35 | 54 |
| Latex-Menge bedeutet dabei Polymerfeststoff auf Kohle-Trockensubstanz | | | | | |

Braunkohleschwelkoks/Magnetit-Agglomerate

Von diesen Agglomeraten wurde die Stabilität in Abhängigkeit von der Drehzahl geprüft. Hierzu wurde nach der Agglomeratherstellung das Agglomerat aus Magnetit und Kohle in halber Höhe des Gefäßes mit Hilfe von zwei ringförmig um das Gefäß gelegten Permanentmagneten abgetrennt und die nicht abgetrennte Kohle in der Dispersion bestimmt. Die übrigen Bedingungen entsprechen Beispiel 1. Auch ohne Latex-Zugabe bilden sich bereits Agglomerate, die aber sehr scherinstabil sind.

Beispiel 6

Es wurde eine 1 gew.-%ige Dispersion aus gleichen Teilen Braunkohleschwelkoks und Rohschlamm hergestellt und auf pH 7,5 gestellt. 7,5 Gew.-% Latex 1 (Feststoff auf Kohletrockengewicht) wurden zugegeben und 15 Minuten gerührt. Dann wurde die Drehzahl geändert und 15 Minuten bei der geänderten Drehzahl gerührt. Die nachfolgende Tabelle zeigt die Menge an abgeschiedene Kohle in Gew.-%, die über eine Kohle-Polymer-Magnetit-Agglomeration magnetisch abgetrennt wurde, in Abhängigkeit von der Drehzahl (Scherkraft).

Beispiel 7

Beispiel 6 wurde mit 10 Gew.-% Latex 4 anstelle von Latex 1 wiederholt.

EP 0 210 493 B1

| | Umdrehungen pro Minute | | | | | |
|---|---|---|---|---|---|---|
| | 0 | 200 | 300 | 400 | 500 | 600 |
| ohne Latex | 90 | 65 | 42 | 26 | 10 | 6 |
| Beispiel 6 | 100 | 100 | 100 | 93 | 85 | 75 |
| Beispiel 7 | 100 | 92 | 78 | 78 | 81 | 90 |

Beispiel 8

Agglomerate aus 15 g Braunkohlen-Schwefelkoks, 15 g Rohschlamm und 0,75 g Latex 1 (Feststoff) wurden in 250 ml Abwasser gegeben und mit 3 Belebtschlamm geimpft. Zur Adaption des Systems an das Abwasser wurden die Ansätze etwa drei Wochen unter täglichem Austausch des Abwassers bei 28°C auf der Schüttelmaschine inkubiert. Anschließenfd wurde an drei verschiedenen Tagen die Abbaugeschwindigkeit des Ansatzes mit der Latexpräparation gegen die Abbaugeschwindigkeit freischwimmender Zellen ohne Latexpräparation verglichen.

Nach 24 Stunden Inkubation wurden im ersten Fall im Durchschnitt der drei Messungen 42 Gew.-% des organischen Kohlenstoffs abgebaut, im zweiten Fall nur 10,7 Gew.-%.

Bei einer Inkubation von nur 6 Stunden betrugen die Werte 27,2 Gew.-% bzw. 8,5 Gew.-%.

**Patentansprüche**

**1.** Wäßrige Suspensionen von Agglomeraten, bei denen die Agglomerate aus

(a) organischen und/oder anorganischen Teilchen und
(b) einem Latex aus der Reihe bestehend aus Styrol-Butadien-, Butadien-, Butadien-Arcylnitril-, Chlorpren-, Vinylchlorid-, Ethylen-Vinylacetat-, Acrylat- oder Ethylen-Propylen-Dien-Polymer-Latex und Naturlatex aufgebaut sind,
wobei
(c) die Menge an Latextrockensubstanz 0,5 bis 25 Gew.-%, bezogen auf (a), beträgt und wobei
(d) die Agglomerate eine mittlere Absetzgeschwindigkeit von 10 bis 200 m/h aufweisen.

**2.** Suspensionen nach Anspruch 1, wobei die Latextrockensubstanz ein $T_g$ hat, der kleiner oder gleich der Agglomerationstemperatur ist.

**3.** Verfahren zur Herstellung der wäßrigen Suspension nach Anspruch 1, dadurch gekennzeichnet, daß man wäßrige Suspensionen der organischen und/oder anorganischen Teilchen mit 0,5 bis 25 Gew.-% Latex, Feststoff bezogen auf die Menge an anorganischen und organischen Teilchen, versetzt und rührt.

**4.** Verwendung der wäßrigen Suspensionen gemäß Anspruch 1 als Träger und/oder Katalysator in biotechnologischen Prozessen.

**Claims**

**1.** Aqueous suspensions of agglomerates in which the agglomerates are made up of
(a) organic and/or inorganic particles and
(b) a latex from the series consisting of styrene/butadiene, butadiene, butadiene/acrylonitrile, chloroprene, vinyl chloride, ethylene/vinyl acetate, acrylate or ethylene/propylene/diene polymer latex and natural latex,
(c) the quantity of latex solids being from 0.5 to 25% by weight, based on (a), and
(d) the agglomerates having an average sedimentation rate of 10 to 200 m/h.

**2.** Suspensions as claimed in claim 1, the latex solids having a $T_g$ which is below or equal to the agglomeration temperature.

**3.** A process for the production of the aqueous suspensions claimed in claim 1, characterized 0.5 to 25%

5

by weight latex solids, based on the quantity of inorganic or organic particles, is added to and stirred with aqueous suspensions of the organic and/or inorganic particles.

4. The use of the aqueous suspensions claimed in claim 1 as a support and/or catalyst in biotechnological processes.

**Revendications**

1. Suspensions aqueuses d'agglomérats dans lesquelles les agglomérats sont constitués de
   (a) des particules organiques et/ou minérales et
   (b) un latex choisi parmi les latex de polymères de styrène-butadiène, de butadiène, de butadiène-acrylonitrile, de chloroprène, de chlorure de vinyle, d'éthylène-acétate de vinyle, d'acrylates ou d'éthylène-propylène-diène et le latex naturel,
   (c) la quantité de matières sèches du latex représentant de 0,5 à 25 % du poids de (a) et
   (d) les agglomérats ayant une vitesse de sédimentation moyenne de 10 à 200 m/h.

2. Suspension selon la revendication 1, dans laquelle la matière sèche du latex a une température de transition vitreuse $T_g$ inférieure ou égale à la température d'agglomération.

3. Procédé de préparation des suspensions aqueuses de la revendication 1, caractérisé en ce que, à une suspension aqueuse des particules organiques et/ou minérales, on ajoute de 0,5 à 25 % en poids de latex, en matières solides, par rapport à la quantité de particules minérales et organiques, et on agite.

4. Utilisation des suspensions aqueuses de la revendication 1 en tant que supports et/ou catalyseurs dans des opérations biotechnologiques.